# EUROPÄISCHE PATENTSCHRIFT

(11) **EP 1 047 579 B1**
(45) Veröffentlichungstag und Bekanntmachung des Hinweises auf die Patenterteilung: **27.02.2002**
(21) Anmeldenummer: 98966363.8
(22) Anmeldetag: 17.12.1998
(51) Int. Cl.: B60R 21/16

(54) **SEITENAUFPRALL-SCHUTZSYSTEM FÜR FAHRZEUGE**
SIDE COLLISION PROTECTION SYSTEM FOR VEHICLES
SYSTEME DE PROTECTION POUR VEHICULES AGISSANT EN CAS D'IMPACT LATERAL

(30) Priorität: 22.01.1998 DE 29801051 U
(43) Veröffentlichungstag der Anmeldung: 02.11.2000
(73) Patentinhaber: TRW Occupant Restraint Systems GmbH & Co. KG, 73553 Alfdorf (DE)
(72) Erfinder: BRUCKER, Roland, D-73529 Schwäbisch-Gmünd (DE)
(74) Vertreter: Degwert, Hartmut, Dipl.-Phys.
(86) Internationale Anmeldenummer: EP9808304
(87) Internationale Veröffentlichungsnummer: WO9937507

(56) Entgegenhaltungen:
- EP-A- 0 686 527
- EP-A- 0 798 170
- DE-A- 2 944 319
- DE-A- 19 541 440
- DE-A- 19 806 301
- GB-A- 2 314 300

## Beschreibung

Die Erfindung betrifft ein Seitenaufprall-Schutzsystem für Fahrzeuge.

Ein solches Schutzsystem enthält einen aufblasbaren Gassack und eine Gasquelle wie einen Gasgenerator zum Aufblasen des Gassacks. Der Gassack wird bei einer Fahrzeugkollision innerhalb von wenigen Millisekunden aufgeblasen und dient dem Fahrzeuginsassen als Aufprallkissen v.a. zum Schutz des Kopfbereichs, insbesondere bei einer seitlichen Kollision. Um den Schutz auf Mehrfach-Kollisionen auszudehnen, insbesondere im Hinblick auf ein Szenario mit Überschlag des Fahrzeugs oder Folgeunfall, wird die Wandung des Gassacks weitgehend luftdicht ausgebildet, so daß der Gassack länger als z.B. eine Sekunde aufgeblasen bleibt. Allerdings wird dann der Impuls eines in den Gassack eindringenden Körperteils nahezu vollständig zurückgegeben, da der Gassack ein elastisches Kissen bildet. Eine Bedämpfung des Aufpralls durch kontrolliertes Abströmen des Füllgases durch eine Entlastungsöffnung kommt nicht in Betracht, wenn die Standzeit des Gassacks erhalten bleiben soll.

Aus der gattungsbildenden EP-A-798 170 ist ein Seitenaufprall-Schutzsystem für Fahrzeuge mit einem aufblasbaren Gassack, der eine durch eine Reißnaht abgegrenzte Aufreißkammer aufweist, und einer Gasquelle zum Autblasen des Gassacks bekannt. Die Reißnaht ist in ihrer Festigkeit so dimensioniert, daß sie dem Fülldruck der von der Gasquelle bereitgestellten Füllgase standhält.

Die Erfindung schafft ein Seitenaufprall-Schutzsystem, durch das bei einem Aufprall des Insassen einerseits die kinetische Energie des eindringenden Körperteils abgebaut werden kann, die Schutzfunktion für den Insassem aber dennoch während der Dauer eines komplexen Unfallablaufes erhalten bleibt. Dies wird bei einem Schutzsystem der oben näher beschriebenen Art dadurch erreicht, daß die Wandung des Gassacks durch eine innenseitige Beschichtung im wesentlichen gasdicht ist und mehrere Aufreißkammern vorgesehen sind, deren Reißnähte so dimensioniert sind, daß sie bei unterschiedlichen Werten des Gassack-Innendrucks aufreißen, die höher sind als der Fülldruck der von der Gasquelle bereitgestellten Füllgase.

Erst durch den Überdruck, der bei einem heftigen Eindringen eines Körperteils im aufgeblasenen Gassack entsteht, wird die Aufreißkammer geöffnet, und es kann Gas in die zuvor leere Aufreißkammer einströmen. Dadurch wird die kinetische Energie des eindringenden Körperteils abgebaut, wobei aber die Gasmenge im Gassack insgesamt erhalten bleibt, so daß der Gassack für Nachfolgeeinsätze weiter zur Verfügung steht. Nachdem die Autprallhärte und damit die Komprimierung des Gassacks, die zur Öffnung der Aufreißkammer(n) führt, auch z.B. vom Gewicht und von der Sitzposition des Insassen abhängt, wird damit eine Schutzfunktion erreicht, bei der diese Parameter berücksichtigt werden. So kann beim Aufprall eines schweren Insassen auf den Gassack die Öffnung mehrerer Aufreißkammern notwendig sein, um den Aufprall abzufangen; dagegen wird bei einem leichteren Insassen, der mit der gleichen Geschwindigkeit auf den Gassack prallt, aufgrund des geringeren Impulses möglicherweise die Öffnung einer einzigen Kammer ausreichend sein.

Aus der erfindungsgemäßen Ausbildung des Schutzsystems ergibt sich als weiterer Vorteil, daß die Gefahr eines Gassackrisses bei extrem hohen Temperaturen und der damit verbundenen stärkeren Expansion des Gases durch die Möglichkeit, den Überdruck durch Öffnen einer oder mehrerer Aufreißkammern auszugleichen, vermindert wird. Dadurch kann das Gassackvolumen verringert werden, so daß auch bei extrem niederen Temperaturen der Gassack ausreichend gefüllt ist, um dem Insassen Schutz zu bieten.

Für diese erhöhten Schutzfunktionen werden außer den genannten keine zusätzlichen, störenden oder aufwendigen Teile benötigt. Auch muß der Stauraum für den gefalteten Gassack nicht vergrößert werden.

Vorzugsweise weist der Gassack mehrere Aufreißkammern auf, die verschieden groß sind. Bei Eindringen eines Körperteils in den Gassack können diese stufenweise geöffnet werden. Dabei sind die verschiedenen Kammern so ausgebildet, daß sie bei unterschiedlichen Werten des Innendrucks des Gassacks aufreißen, wobei die Werte jeweils exakt vorherbestimmt werden können. Durch eine geeignete Anordnung der Kammern im Gassack kann damit eine Schutzfunktion erreicht werden, die optimal auf Position und Härte des Fahrzeuginsassen-Aufpralls abgestimmt ist. Es werden dann nämlich bei einem Aufprall genau so viele Aufreißkammern des Gassacks im Bereich der Aufprallstelle geöffnet wie nötig sind, um den Aufprall bestmöglich abzufangen. Somit werden bei Beanspruchung der Gassack-Seitenaufprall-Schutzvorrichtung die oben erwähnten individuellen Eigenschaften eines Fahrzeuginsassen, wie etwa Größe, Gewicht und Sitzposition noch besser mit einbezogen.

Weitere Merkmale und Vorteile der Erfindung ergeben sich aus der nachfolgenden Beschreibung und der Zeichnung, auf die Bezug genommen wird. In der Zeichnung zeigen:
Fig. 1 eine perspektivische Ansicht eines Schutzsystems mit aufgeblasenem Gassack vor dem Aufprall eines Fahrzeuginsassen,
Fig. 2 den Gassack aus Figur 1 mit einer angedeuteten ersten Aufprallstelle eines Fahrzeuginsassen,
Fig. 3 den Gassack aus Fig. 1 mit einer geöffneten Aufreißkammer nach einem ersten Aufprall, und
Fig. 4 den Gassack aus Fig. 1 mit mehreren angedeuteten Folgeaufprallstellen.

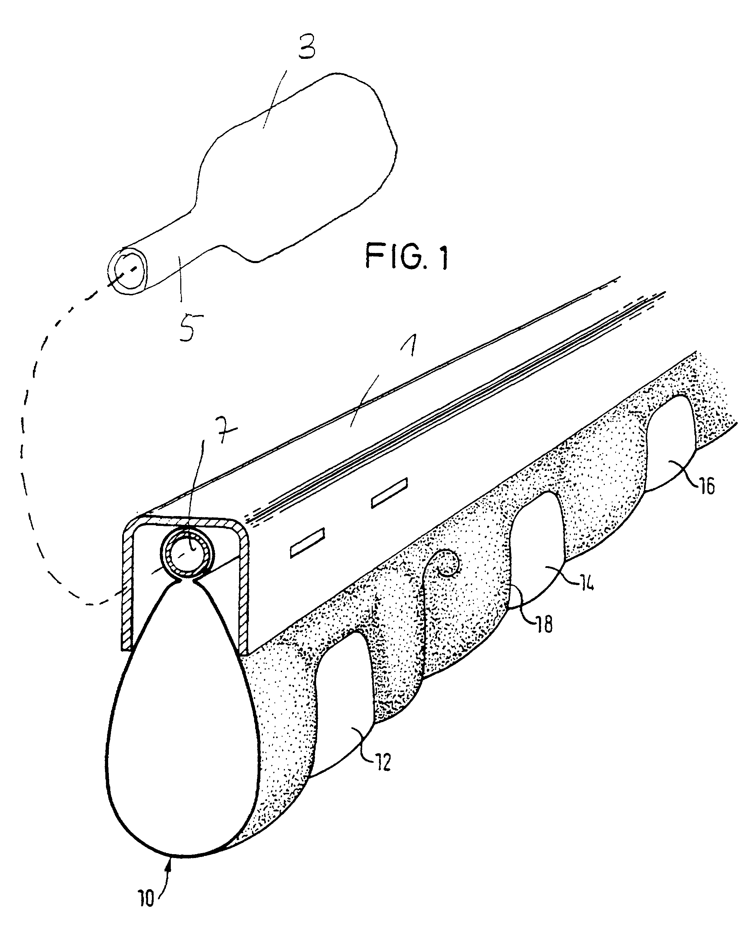

Das in den Figuren 1 bis 4 gezeigte Seitenaufprall-Schutzsystem für Fahrzeuge enthält ein langgestrecktes Gehäuse 1 in Form eines U-Profils, einen Gasgenerator 3 und einen Gassack 10, der im Normalzustand innerhalb des Gehäuses 1 zusammengefaltet ist. Das Gehäuse 1 wird unter einer Verkleidung oder Abdeckung seitlich im Fahrzeug untergebracht. Der Gasgenerator 3 ist über ein Zuführrohr 5 mit einem Verteilerrohr 7 am Boden des Gehäuses 1 verbunden. Der Gasgenerator 3 stellt bei Aktivierung Füllgase für den Gassack unter einem Fülldruck zur Verfügung, der im voraus und reproduzierbar innerhalb definierter Grenzen bekannt ist. Der Gassack 10 hat eine im wesenlichen gasdichte Wandung, insbesondere durch eine innenseitige Beschichtung, um eine lange Standzeit zu gewährleisten.

Figur 1 zeigt den entfalteten Gassack 10 im aufgeblasenen Zustand. Der Gassack 10 umfaßt mehrere, an seiner dem Fahrzeuginsassen zugewandten Außenwand angebrachte Aufreißkammern 12, 14, 16. Die leeren Aufreißkammern sind vom autblasbaren Volumen des Gassacks 10 durch Reißnähte 18 weitgehend gasdicht abgetrennt und werden demnach beim Entfalten des Gassacks 10 nach einer Kollision nicht mit Gas gefüllt. Die Reißnähte 18 sind im Hinblick auf den im voraus bekannten Fülldruck des Gasgenerators 3 so dimensioniert, daß sie diesem Fülldruck standhalten.

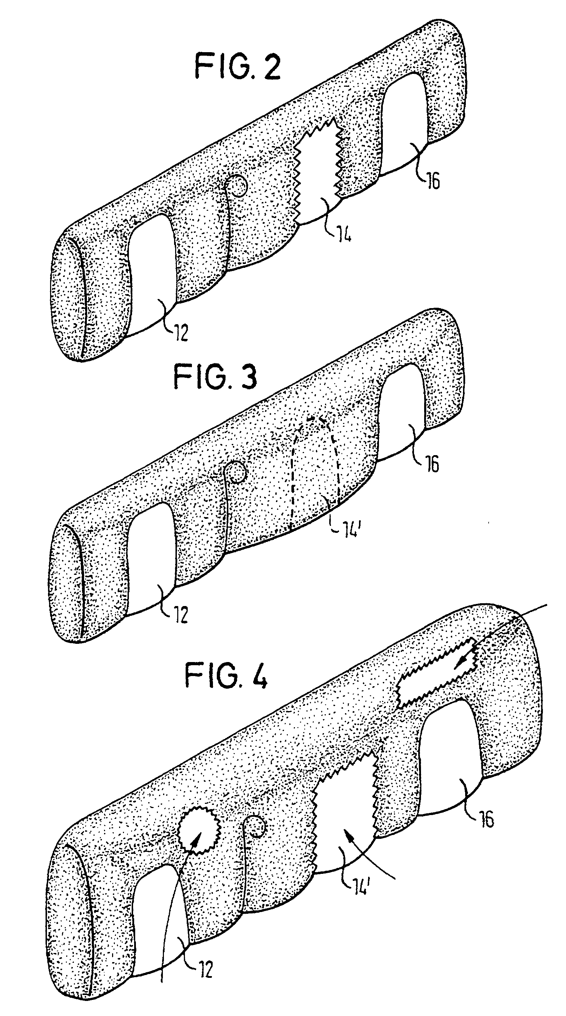

Trifft nun z.B. ein Fahrzeuginsasse mit dem Kopf auf eine Stelle des Gassacks 10, so wird die Gasfüllung komprimiert, und es entsteht ein (lokaler) Überdruck im Gassack 10 (Fig. 2), der den normalen Fülldruck erheblich überschreiten kann. Die aufgrund des Überdrucks auf die Reißnähte 18 der Aufreißkammer 14 wirkenden Kräfte führen dazu, daß die Reißnähte 18 der Aufreißkammer 14 aufgetrennt werden und Gas in die geöffnete Aufreißkammer 14' eindringen kann (siehe Fig. 3), wobei aber kein Gas aus dem Gesamtvolumen des Gassacks 10 entweicht. Je nach Härte des Aufpralls können noch weitere Aufrcißkammern 12, 16 geöffnet werden, im hier dargestellten Beispiel ist jedoch lediglich die geöffnete Aufreißkammer 14' betroffen. Durch das Einströmen von Gas in die geöffnete Aufreißkammer 14' wird die kinetische Energie des Kopfes des Fahrzeuginsassen abgebaut, d.h. die Aufprallgeschwindigkeit wird mit dem Eindringen verringert. Damit wird der Rückstoß weitgehend abgefangen, und eine Verletzungsgefahr durch ein anschließendes Zusammenstoßen mit einem Fahrzeugleil oder einem anderen Fahrzeuginsassen wird entscheidend herabgesetzt.

Kommt es nach der ersten Kollision zu einem Überschlag des Fahrzeugs oder (einer) weiteren Kollision(en) durch einen oder mehrere Folgeunfälle, so kann es passieren, daß der Fahrzeuginsasse weitere Male gegen den Gassack 10 geschleudert wird, evtl. auch auf andere Stellen als beim ersten Aufprall, wie in Fig. 4 verdeutlicht. Da insgesamt kein Gas aus dem Gassack 10 entweichen kann, steht der Gassack 10 jedesmal als Aufprallkissen zum Schutz des Fahrzeuginsassen zur Verfügung. Je nach Position und Härte der Folgeaufprälle können dabei weitere Aufreißkammern 12, 16, wie oben beschrieben, geöffnet werden.

## Patentansprüche

1. Seitenaufprall-Schutzsystem für Fahrzeuge, mit einem aufblasbaren Gassack (10), der eine durch eine Reißnaht (18) abgegrenzte Aufreißkammer (12) aufweist, und einer Gasquelle (3) zum Aufblasen des Gassacks, wobei die Reißnaht (18) in ihrer Festigkeit so dimensioniert ist, daß sie dem Fülldruck der von der Gasquelle (3) bereitgestellten Füllgase standhält, **dadurch gekennzeichnet, daß** die Wandung des Gassacks durch eine innenseitige Beschichtung im wesentlichen gasdicht ist und mehrere Aufreißkammern (12, 14, 16) vorgesehen sind, deren Reißnähte (18) so dimensioniert sind, daß sie bei unterschiedlichen Werten des Gassack-Innendrucks aufreißen, die höher sind als der Fülldruck der von der Gasquelle (3) bereitgestellten Füllgase.

2. Seitenaufprall-Schutzsystem nach Anspruch 1, **dadurch gekennzeichnet, daß** die Aufreißkammern (12, 14, 16) jeweils verschieden groß sind.

## Claims

1. A side impact protection system for vehicles, comprising an inflatable gas bag (10) which has a burst chamber (12) delimited by a tear seam (18), and a gas source (3) for inflating the gas bag, the tear seam (18) being dimensioned as regards its strength such that it withstands the filling pressure of the filling gases provided by the gas source (3), **characterized in that** the wall of the gas bag is essentially gas-tight due to a coating on the inner side, and a plurality of burst chambers (12, 14, 16) is provided, the tear seams (18) of which are dimensioned such that they tear open at differing values of the gas bag internal pressure, which are higher than the filling pressure of the filling gases provided by the gas source (3).

2. The side impact protection system as set forth in claim 1, **characterized in that** the burst chambers (12, 14, 16) are each differing in size.

## Revendications

1. Système de protection contre les chocs latéraux, comportant un coussin à gaz (10) gonflable qui présente une chambre d'éclatement (12) délimitée par une couture d'arrachage, et une source de gaz (3) pour gonfler le coussin à gaz, la couture d'arrachage (18) ayant des dimensions de stabilité telles qu'elle résiste à la pression de remplissage des gaz de remplissage fournis par la source de gaz (3), **caractérisé en ce que** la paroi du coussin à gaz est sensiblement étanche au gaz grâce à un revêtement intérieur et qu'il est prévu plusieurs chambres d'éclatement (12, 14, 16) dont les coutures d'arrachage (18) ont des dimensions telles qu'elles s'arrachent en cas de valeurs différentes de la pression intérieure du coussin à gaz, lesdites valeurs étant supérieures à la pression de remplissage des gaz de remplissage fournis par la source de gaz (3).

2. Système de protection contre les chocs latéraux selon la revendication 1, **caractérisé en ce que** les chambres d'éclatement (12, 14, 16) sont chacune de taille différente.
